(19) Europäisches Patentamt / European Patent Office / Office européen des brevets

(11) **EP 4 107 494 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **21702473.6**

(22) Anmeldetag: **28.01.2021**

(51) Internationale Patentklassifikation (IPC):
**G01F 23/296** $^{(2022.01)}$  **G01N 9/00** $^{(2006.01)}$
**G01N 11/16** $^{(2006.01)}$  **G01F 1/32** $^{(2022.01)}$
**G01F 1/66** $^{(2022.01)}$

(52) Gemeinsame Patentklassifikation (CPC):
**G01F 23/296; G01F 1/32; G01F 1/66; G01N 9/002;**
**G01N 11/16;** G01N 2009/006

(86) Internationale Anmeldenummer:
**PCT/EP2021/051993**

(87) Internationale Veröffentlichungsnummer:
**WO 2021/165011 (26.08.2021 Gazette 2021/34)**

(54) **VIBRONISCHER SENSOR**

VIBRONIC SENSOR

CAPTEUR VIBRONIQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **17.02.2020 DE 102020104066**

(43) Veröffentlichungstag der Anmeldung:
**28.12.2022 Patentblatt 2022/52**

(73) Patentinhaber: **Endress+Hauser SE+Co. KG**
**79689 Maulburg (DE)**

(72) Erfinder:
• **SCHLEIFERBÖCK, Jan**
**79595 Rümmingen (DE)**

• **BRENGARTNER, Tobias**
**79312 Emmendingen (DE)**
• **LOPATIN, Sergey**
**79540 Lörrach (DE)**
• **ROSENHEIM, Julia**
**79664 Wehr (DE)**

(74) Vertreter: **Koslowski, Christine Adelheid**
**Endress+Hauser Group Services
(Deutschland) AG+Co. KG
Colmarer Straße 6
79576 Weil am Rhein (DE)**

(56) Entgegenhaltungen:
EP-A1- 0 903 563     EP-A1- 0 984 248
WO-A1-2004/017025    DE-A1- 10 057 974
DE-A1-102015 122 124 DE-A1-102017 130 527

**Beschreibung**

Die Erfindung betrifft ein Verfahren und eine Vorrichtung zur Bestimmung und/oder Überwachung zumindest einer Prozessgröße eines Mediums in einem Behältnis. Bei der Prozessgröße handelt es sich beispielsweise um einen Füllstand, insbesondere einen Grenzstand, um die Dichte und/oder um die Viskosität des Mediums. Bei dem Behältnis kann es sich beispielsweise um einen Behälter oder um eine Rohrleitung handeln.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium 2 durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit. Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor $\geq 1$ ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz $\omega$, Amplitude A und/oder Phase $\Phi$. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Die Dichte und/oder Viskosität wiederum lassen sich mit einem derartigen Messgerät nur ermitteln, wenn die schwingfähige Einheit vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder-parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

So ist aus der bisher unveröffentlichten internationalen Patentanmeldung mit dem Aktenzeichen PCT/EP2019/064724 ein vibronischer Multisensor bekannt geworden, welcher zwei Messprinzipien - das vibronischer Messprinzip und das Ultraschall-Messprinzip - in einer einzigen Vorrichtung miteinander verbindet. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und hinsichtlich zumindest zwei unterschiedlicher Prozessgrößen ausgewertet. Die beiden Empfangssignale können dabei vorteilhaft unabhängig voneinander ausgewertet werden.

Die DE 10 2017 130527 A1 beschreibt ein Verfahren und eine Vorrichtung zur Bestimmung und/oder Überwachung einer Prozessgröße eines Mediums mit einem Sensor bestehend aus vier stabförmigen Elementen, wobei zwei dieser Elemente eine mechanisch schwingfähige Einheit bilden, welche mittels eines Anregesignals zu mechanischen Schwingungen angeregt wird. Die DE 10 2015 122124 A1 beschreibt ein Verfahren und eine Vorrichtung zur Bestimmung und/oder Überwachung einer Prozessgröße eines Mediums mit einem Sensor mit zwei stabförmigen Elementen, welche gleichzeitig als schwingfähige Einheit und als Wirbelablöseelemente dienen.

Ausgehend vom Stand der Technik liegt der vorliegenden Erfindung die Aufgabe zugrunde, den Anwendungsbereich eines vibronischen Sensors zu erweitern.

Diese Aufgabe wird gelöst durch eine Vorrichtung zur Bestimmung und/oder Überwachung zumindest einer Prozessgröße eines Mediums in einem Behältnis nach Anspruch 5 + sowie durch ein Verfahren zur Bestimmung und/oder Überwachung zumindest einer Prozessgröße eines Mediums in einem Behältnis nach Anspruch 1.

Die erfindungsgemäße Vorrichtung umfasst vier an einer Membran angeordnete stabförmige Elemente, drei piezoelektrische Elemente und eine Elektronik, wobei ein erstes und ein zweites stabförmiges Element derart angeordnet und ausgestaltet sind, dass sie eine mechanisch schwingfähige Einheit bilden, wobei die Vorrichtung dazu ausgestaltet ist, die schwingfähige Einheit mittels eines Anregesignals zu mechanischen Schwingungen anzuregen, und die mechanischen Schwingungen der schwingfähigen Einheit zu empfangen und in ein erstes Empfangssignal umzuwandeln, ein Sendesignal auszusenden und ein zweites Empfangssignal zu empfangen, und wobei die Elektronik dazu ausgestaltet ist, anhand des ersten und/oder zweiten Empfangssignals die zumindest eine Prozessgröße gemäß des erfindungsgemäßen Verfahrens zu bestimmen.

Die Sensoreinheit ist Teil der Vorrichtung zur Bestimmung und/oder Überwachung von einer oder mehrerer Prozessgrößen eines Mediums und umfasst vier stabförmige Elemente, von denen zwei eine schwingfähige Einheit, ähnlich oder entsprechend einer Schwinggabel, bilden. Zwei der drei piezoelektrischen Elemente dienen bevorzugt als Antriebs-/Empfangseinheit zur Erzeugung und Detektion der mechanischen Schwingungen der mechanisch schwingfähigen Einheit in Form des ersten Empfangssignals, welches durch das Medium beeinflusst wird und entsprechend zur Bestimmung einer Prozessgröße herangezogen werden kann. Das dritte piezoelektrische Element dient dazu, dass Sendesignal auszusenden, und das zweite Empfangssignal zu empfangen. Das Sendesignal durchläuft zumindest zeitweise und abschnittsweise das Medium und wird ebenfalls durch die physikalischen und/oder chemischen Eigenschaften des Mediums beeinflusst und kann entsprechend auch zur Bestimmung einer Prozessgröße des Mediums herangezogen werden.

Im Rahmen der vorliegenden Erfindung ist es vorteilhaft möglich, zumindest zwei Messprinzipien in einer einzigen Vorrichtung zu realisieren, ähnlich wie in der bisher unveröffentlichten internationalen Patentanmeldung mit dem Aktenzeichen PCT/EP2019/064724. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und hinsichtlich zumindest einer oder vorzugsweise hinsichtlich zwei verschiedener Prozessgrößen ausgewertet. Die beiden Empfangssignale können dabei vorteilhaft unabhängig voneinander ausgewertet werden. So kann erfindungsgemäß die Anzahl ermittelbarer Prozessgrößen deutlich erhöht werden, was zu einer höheren Funktionalität des jeweiligen Sensors bzw. in einem erweiterten Anwendungsbereich resultiert.

In einer Ausgestaltung umfasst die erfindungsgemäße Vorrichtung vier piezoelektrische Elemente. Dann ist die Vorrichtung beispielsweise dazu ausgestaltet, mittels eines ersten und zweiten piezoelektrischen Elements die schwingfähige Einheit mittels des elektrischen Anregesignals zu mechanischen Schwingungen anzuregen, und die mechanischen Schwingungen der schwingfähigen Einheit zu empfangen und in das elektrisches Empfangssignal umzuwandeln, und mittels eines dritten und vierten piezoelektrischen Elements das Sendesignal auszusenden und das zweite Empfangssignal zu empfangen. Grundsätzlich kann jedes stabförmige Element mittels des Anregesignals und/oder mittels des Sendesignals beaufschlagt werden. Bei einer Verwendung zweier unterschiedlicher Frequenzen des Anregesignals und des Sendesignals kann in der Elektronik eine geeignete Signaltrennung hinsichtlich der Empfangssignale vorgenommen werden.

Es sind aber auch zahlreiche weitere Anordnungen und Ausgestaltungen denkbar, welche ebenfalls unter die vorliegende Erfindung fallen. Es ist beispielsweise denkbar, dass jeweils ein piezoelektrisches Element zur Schwingungserzeugung und zur Schwingungsdetektion jeweils eines stabförmigen Elements dient. Die beiden die schwingfähige Einheit bildenden stabförmigen Elemente können aber in anderen Ausgestaltungen auch gemeinsam zu Schwingungen angeregt werden. Ferner ist beispielsweise in einer Ausgestaltung auch die Verwendung eines einzigen piezoelektrischen Elements, welches beispielsweise aber nicht notwendigerweise in einem der die schwingfähige Einheit bildenden stabförmigen Elemente angeordnet sein kann, zur Schwingungserzeugung und -detektion ausreichend. Im Falle, dass drei piezoelektrische Elemente vorgesehen sind und das dritte piezoelektrische Element zur Erzeugung des Sendesignals dient, kann eines der stabförmigen Elemente, welches nicht als schwingfähige Einheit dient, dazu ausgestaltet und/oder derart angeordnet sein, dass das Sendesignal an diesem stabförmigen Element reflektiert und zurück zu dem dritten piezoelektrischen Element geleitet wird. Es kann aber auch ein piezoelektrisches Element zur Erzeugung des Sendesignals und ein weiteres zur Detektion des zweiten Empfangssignals herangezogen werden.

Die Anordnung und Ausgestaltung der piezoelektrischen Elemente und stabförmigen Elemente kann insbesondere, zumindest hinsichtlich der die schwingfähige Einheit bildenden Elemente, einer der in der DE102017130527A1 beschriebenen Ausgestaltungen für einen vibronischen Sensor entsprechen.

Schließlich ist es sowohl denkbar, dass die Sensoreinheit gleichzeitig mittels des Anregesignals und mittels des Sendesignals beaufschlagt wird, wobei das Anregesignal und das Sendesignal einander überlagert werden oder gleichzeitig erzeugt werden und unterschiedliche piezoelektrische Elemente der Vorrichtung mit unterschiedlichen Signalen beaufschlagt werden. Alternativ kann die Sensoreinheit aber auch abwechselnd mittels des Anregesignal und mittels des Sendesignals beaufschlagt werden. Beispielsweise handelt es sich bei dem Anregesignal um ein elektrisches Signal mit zumindest einer vorgebbaren Frequenz, insbesondere um ein sinusförmiges oder um ein rechteckförmiges Signal. Vorzugsweise wird die mechanisch schwingfähige Einheit zumindest zeitweise zu Resonanzschwingungen angeregt. Bei dem Sendesignal wiederum handelt es sich insbesondere um ein, insbesondere gepulstes, Ultraschallsignal, insbesondere um zumindest einen Ultraschallpuls.

Mit der erfindungsgemäßen Vorrichtung lassen sich zumindest teilweise unterschiedliche Prozessgrößen und/oder -parameter unabhängig voneinander bestimmen, so dass eine umfassende Analyse des jeweiligen Prozesses mittels eines einzigen Messgeräts ermöglicht wird. Dadurch, dass dieselbe Sensoreinheit für beide Messverfahren zum Einsatz kommt, kann darüber hinaus die Genauigkeit der Messungen deutlich erhöht werden. Darüber hinaus kann anhand der beiden Prozessgrößen eine Zustandsüberwachung der Vorrichtung vorgenommen werden.

In einer Ausgestaltung ist zumindest ein piezoelektrisches Element zumindest teilweise innerhalb eines stabförmigen Elements angeordnet. Insbesondere können auch mehrere oder sämtliche piezoelektrischen Elemente jeweils in einem der stabförmigen Elemente angeordnet sein.

Entsprechende Ausgestaltungen einer Sensoreinheit sind beispielsweise in den Dokumenten DE102012100728A1 sowie DE102017130527A1 beschrieben worden. Es sei darauf verwiesen, dass die vorliegende Erfindung jedoch nicht auf eine der in den beiden Dokumenten beschriebenen möglichen Ausgestaltungen der Sensoreinheit beschränkt ist. Hierbei handelt es sich vielmehr nur um beispielhafte mögliche konstruktive Ausgestaltungen. Es ist nicht zwingend notwendig, die piezoelektrischen Elemente ausschließlich im Bereich der stabförmigen Elemente anzuordnen. Vielmehr können einzelne der verwendeten piezoelektrischen Elemente auch im Bereich der Membran, an welcher die stabförmigen Elemente angeformt sind, angeordnet sein.

Eine weitere Ausgestaltung beinhaltet, dass es sich bei der Prozessgröße um einen, insbesondere vorgebaren, Füllstand, die Dichte, die Viskosität, die Schallgeschwindigkeit, die Reynoldszahl, oder eine aus zumindest einer dieser Größen abgeleitete Größe handelt.

Es ist ferner von Vorteil, wenn die Elektronik dazu ausgestaltet ist, anhand des ersten und/oder zweiten Empfangssignals zumindest zwei unterschiedliche Prozessgrößen zu bestimmen. In diesem Zusammenhang sind zahlreiche Varianten denkbar, von denen einige bevorzugte in der bisher unveröffentlichten internationalen Patentanmeldung mit dem Aktenzeichen PCT/EP2019/064724 angegeben sind.

Nachfolgend werden einige besonders bevorzugte Varianten für mögliche Ausgestaltungen der Sensoreinheit, also der Anordnung und/oder Ausgestaltungen der stabförmigen und piezoelektrischen Elemente, angegeben. Die Erfindung ist aber keineswegs auf die beschriebenen Varianten beschränkt, sondern ist durch die angefügten Patentansprüche definiert.

In einer Ausgestaltung sind jeweils das erste und das zweite stabförmige Element sowie das dritte und das vierte stabförmige Element gleichartig ausgestaltet und einander bezogen auf einen Mittelpunkt einer Oberfläche der Membran, an welcher die stabförmigen Elemente angeformt sind, einander gegenüber liegend angeordnet sind. Die stabförmigen Elemente sind also paarweise gleichartig ausgestaltet und, auf den Mittelpunkt einer dem Medium zugewandten Oberfläche der Membran bezogen, symmetrisch angeordnet.

In einer weiteren Ausgestaltung ist ein Winkel zwischen einer ersten Verbindungslinie zwischen dem ersten und zweiten stabförmigen Element und eine zweite Verbindungslinie zwischen dem dritten und vierten stabförmigen Element im Wesentlichen senkrecht zueinander. Die beiden Verbindungslinien weisen also einen Winkel von 90° zueinander auf.

Ein Abstand vom Mittelpunkt der Membran kann für die stabförmigen Elemente jeweils gleich oder zumindest teilweise unterschiedlich sein. Insbesondere können jeweils zwei stabförmige Elemente, insbesondere das erste und zweite sowie das dritte und vierte, die Abstände zum Mittelpunkt der dem Medium zugewandten Oberfläche der Membran jeweils gleich sein.

In noch einer Ausgestaltung sind jeweils das erste und zweite sowie das dritte und vierte stabförmige Element gleich lang, wobei eine Länge des ersten und zweiten stabförmigen Elements größer ist als eine Länge des dritten und vierten stabförmigen Elements. Die stabförmigen Elemente sind also paarweise gleich lang. Insbesondere dienen das erste und zweite stabförmige Element zur Schwingungserzeugung.

Schließlich beinhaltet eine Ausgestaltung, dass jeweils das erste und zweite sowie das dritte und vierte stabförmige Element eine identische Grundfläche aufweisen, wobei eine Grundfläche des ersten und zweiten stabförmigen Elements größer ist als eine Grundfläche des dritten und vierten stabförmigen Elements.

Die der Erfindung zugrunde liegende Aufgabe wird ferner gelöst durch ein Verfahren zur Bestimmung und/oder Überwachung zumindest einer Prozessgröße eines Mediums in einem Behältnis, wobei eine mechanisch schwingfähige Einheit mittels eines Anregesignals zu mechanischen Schwingungen angeregt, und die mechanischen Schwingungen der schwingfähigen Einheit empfangen und in ein erstes Empfangssignal umgewandelt werden, ein Sendesignal ausgesendet und ein zweites Empfangssignal empfangen wird, und wobei anhand des ersten und/oder zweiten Empfangssignals die zumindest eine Prozessgröße bestimmt wird.

Erfindungsgemäß wird dabei eine Strömungseigenschaft des Mediums ermittelt. Das erfindungsgemäße Verfahren dient also vorteilhaft der Charakterisierung eines strömenden Mediums. Dabei ist es von Vorteil, wenn eine Durchflussgeschwindigkeit des Mediums mittels des Ultraschall-Messprinzips, d.h. anhand des Sendesignals und des zweiten Empfangssignals, beispielsweise anhand unterschiedlicher Laufzeiten für einen Startzeitpunkt und Empfangszeitpunkts des Sendesignals bzw. zweiten Empfangssignals, ermittelt wird. Es kann somit mit einem Sensor ein Füllstand und ein Durchfluss ermittelt werden.

Erfindungsgemäß ist vorgesehen, dass das dritte und/oder vierte stabförmige Element als Staukörper dient/dienen, welche/r im Falle eines strömenden Mediums Wirbel in dem Medium erzeugt/erzeugen, wobei die Wirbel eine geschwindigkeitsabhängige Wirbelablösefrequenz von dem Staukörper aufweisen, wobei eine Wirbelablösefrequenz anhand von durch die Wirbel verursachten Druckschwankungen mittels der schwingfähigen Einheit bestimmt werden, und wobei anhand der Wirbelablösefrequenz die Strouhal-Zahl, die Reynoldszahl und/oder eine aus der Strouhal-Zahl und/oder der Reynoldszahl abgeleitete Größe ermittelt wird. In diesem Zusammenhang sei auf das Dokument WO00/09973A1, in welcher ein ähnliches Vorgehen für den Fall eines piezoelektrischen Wirbelsensors beschrieben ist. Für diese Ausgestaltung ist es ferner von Vorteil, wenn das dritte und/oder vierte stabförmige Element derart ausgestaltet ist/sind, dass eine Bildung von Wirbeln begünstigt ist.

Zumindest eines der stabförmigen Elemente dient als Staukörper und damit zur Vortex- bzw. Wirbelstromerzeugung. Es handelt sich dabei um eine Kármán'sche Wirbelstraße, bei welcher eine Frequenz der Wirbelerzeugung durch die Reynoldszahl bestimmt ist. Die Reynoldszahl beschreibt das Verhältnis von Trägheit zur Zähigkeit und kann aus der Durchflussgeschwindigkeit, dem Durchmesser des verwendeten Staukörpers und der Viskosität des Mediums ermittelt werden. Die Ablösefrequenz der Wirbel kann wiederum anhand der Strouhal-Zahl bestimmt werden. Es gilt

$$f = SR\frac{v}{d},$$

wobei f die Ablösefrequenz der Wirbel, v die Anströmgeschwindigkeit, und d eine charakteristische Abmessung des Staukörpers ist. Die Ablösefrequenz der Wirbel kann demnach anhand der Strouhal-Zahl bestimmt werden, welche von der Form des Staukörpers und von der Reynoldszahl abhängig ist. Beispielsweise kann also die Wirbelablösefrequenz mittels der mechanisch schwingfähigen Einheit ermittelt werden, und die Durchflussgeschwindigkeit, also die Anströmgeschwindigkeit, kann anhand einer ultraschallbasierten Messung ermittelt werden. Bei bekannter Geometrie des Anströmkörpers kann dann die Reynoldszahl bestimmt werden.

Eine Ausgestaltung des Verfahrens beinhaltet, dass anhand des ersten Empfangssignals die Viskosität und/oder Dichte bestimmt wird, und dass zur Bestimmung der Viskosität und/oder Dichte die Reynoldszahl berücksichtigt wird. Durch Berücksichtigung der Reynoldszahl kann die Messgenauigkeit des jeweiligen Sensors bei der Bestimmung der Dichte und/oder Viskosität deutlich erhöht werden.

Eine weitere Ausgestaltung beinhaltet, dass die Strömungseigenschaft anhand der Strouhal-Zahl und/oder der Reynoldszahl bestimmt wird. Dabei handelt es sich insbesondere um eine Fließeigenschaft des Mediums.

Schließlich wird in einer Ausgestaltung des erfindungsgemäßen Verfahrens das Anregesignal und das Sendesignal in einem ersten Betriebsmodus erzeugt, wobei im ersten Betriebsmodus anhand des ersten und/oder zweiten Empfangssignals die zumindest eine Prozessgröße bestimmt wird, und in einem zweiten Betriebsmodus die Strömungseigenschaft des Mediums ermittelt.

Es sei ferner darauf verwiesen, dass die im Zusammenhang mit dem erfindungsgemäßen Verfahren beschriebenen Ausgestaltungen sich mutatis mutandis auch auf die erfindungsgemäße Vorrichtung anwenden lassen und umgekehrt.

Die Erfindung sowie ihre vorteilhaften Ausgestaltungen werden nachfolgend anhand der Figuren Fig. 1 - Fig. 3 näher beschrieben. Es zeigt:

Fig. 1: eine schematische Skizze eines vibronischen Sensors gemäß Stand der Technik,

Fig. 2 eine beispielhafte Ausgestaltung für eine erfindungsgemäße Vorrichtung, und

Fig. 3 eine Illustrierung zur Bestimmung der Reynoldszahl mittels der in Fig. 2 gezeigten Vorrichtung.

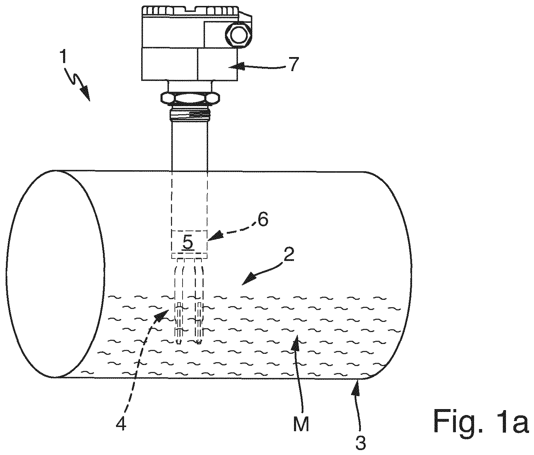

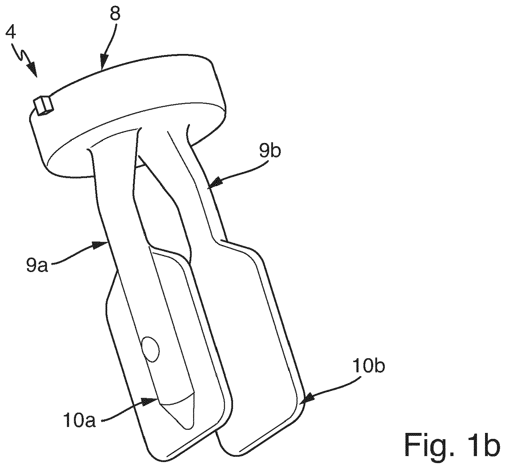

In Fig. 1a ist ein vibronischer Sensor 1 gezeigt. Der Sensor verfügt über eine Sensoreinheit 2 mit einer mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

In Fig. 1b ist eine schwingfähige Einheit 4 in Form einer Schwinggabel, wie sie beispielsweise im von der Anmelderin unter dem Namen LIQUIPHANT vertriebenen vibronischen Sensor 1 integriert wird, gezeigt. Die Schwinggabel 4 umfasst zwei an einer Membran 8 angebrachte stabförmige Elemente 9a,9b, an welchen endseitig je ein Paddel 10a, 10b angeformt ist. Diese werden mithin auch als Gabelzinken bezeichnet. Auf der den stabförmigen Elementen 9a,9b abgewandten Seite der Membran 8 ist die Antriebs-/Empfangseinheit 5 mittels einer stoffschlüssigen und/oder kraftschlüssigen Verbindung befestigt. Für die gezeigte beispielhafte Ausgestaltung sei angenommen, dass die Antriebs-/Empfangseinheit 5 zumindest ein piezoelektrisches Element umfasst. Im fortlaufenden Betrieb wird der Membran 8 über das Anlegen eines Anregesignals $U_A$, beispielsweise in Form einer elektrischen Wechselspannung, welche in der Elektronikeinheit 6 generiert wird, eine Kraft aufgeprägt. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal $U_A$ zu einer Schwingung der stoffschlüssig mit der Antriebs-/Empfangseinheit 5 verbundenen Membran 8, und damit einhergehend der mechanisch schwingfähigen Einheit 4, hervorruft.

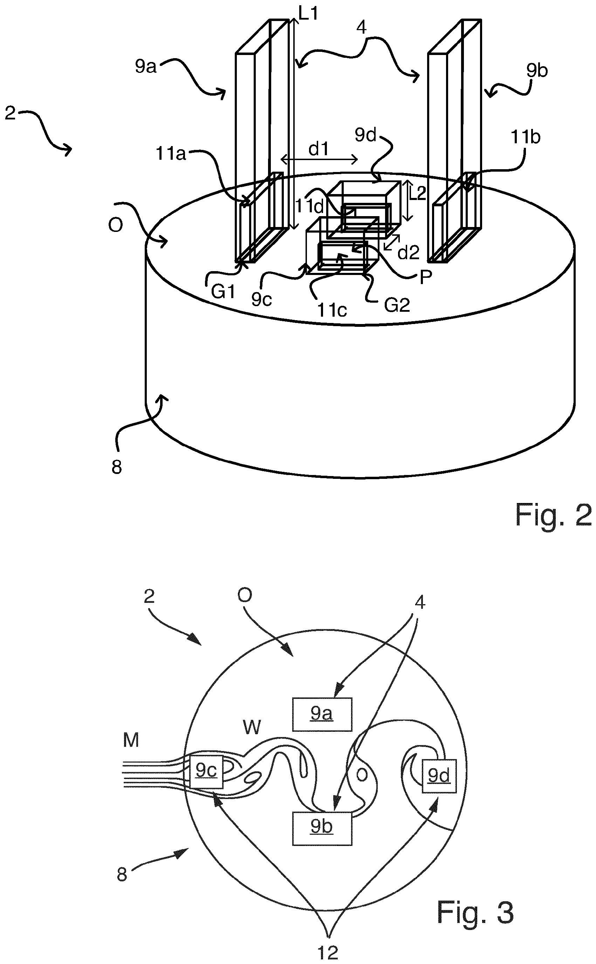

Bei einer erfindungsgemäßen Vorrichtung 1, wie sie beispielhaft in Fig. 3 dargestellt ist, umfasst die Sensoreinheit 2 vier, an der Membran 8 angeformte, stabförmige Elemente 9a-9d und vier piezoelektrische Elemente 11a-11d. Das erste 9a und zweite stabförmige Element 9b bilden die schwingfähige Einheit 4. Jeweils ein piezoelektrisches Element 11a-11d ist in jeweils eines der stabförmigen Elemente 9a-9b eingebracht.

Eine derartige Vorrichtung kann einerseits mit einem Anregesignal A beaufschlagt werden derart, dass die schwingfähige Einheit 4 zu mechanischen Schwingungen angeregt wird. Die Schwingungen werden dabei mittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals $A_1$ und des zweiten Schwingelements 11b mittels eines zweiten Anregesignals $A_2$. Ebenso ist es sowohl denkbar, dass anhand der mechanischen Schwingungen ein erstes Empfangssignal $E_A$, oder von jedem Schwingelement 9a,9b separat ein erstes Empfangssignal $E_{A1}$ bzw. $E_{A2}$ empfangen wird.

Darüber hinaus wird vom dritten piezoelektrischen Element 11c ausgehend ein Sendesignal S ausgesendet, welches von dem vierten piezoelektrischen Element 11d in Form eines zweiten Empfangssignals Es empfangen wird. Da die beiden piezoelektrischen Elemente 11c und 11d im Bereich der stabförmigen Elemente 9c und 9d angeordnet sind, durchläuft das Sendesignal S das Medium M, sofern die Sensoreinheit 2 mit dem Medium M in Kontakt ist und wird entsprechend von den Eigenschaften des Mediums M beeinflusst. Vorzugsweise handelt es sich bei dem Sendesignal S um ein, insbesondere gepulstes, Ultraschallsignal, insbesondere um zumindest einen Ultraschallpuls. In anderen Ausgestaltungen kann auf das vierte piezoelektrische Element 11d verzichtet werden. Dann wird das Sendesignal S an dem vierten stabförmigen Element 11d reflektiert und von dem dritten piezoelektrischen Element 11c empfangen. Das Sendesignal S durchläuft in diesem Falle das Medium M zweimal, was zu einer Verdoppelung einer Laufzeit r des Sendesignals S führt.

Das erste 9a und zweite stabförmige Element 9b sind für die gezeigte Ausgestaltung gleichartig ausgestaltet. Sie weisen dieselbe Grundfläche G1 und Länge L1 auf, und sind auf gegenüberliegenden Seiten eines Mittelpunkts P der dem Medium M zugewandten Oberfläche O der Membran 8 symmetrisch zueinander angeordnet. Auch das dritte 9c und vierte stabförmige Element 9d sind gleichartig ausgestaltet, wiesen die gleiche Grundfläche G2 und Länge L2 auf, und sind auf gegenüberliegenden Seiten eines Mittelpunkts P der dem Medium M zugewandten Oberfläche O der Membran 8 symmetrisch zueinander angeordnet. Die Länge L1 und Grundfläche G1 des ersten 9a und zweiten stabförmigen Elements 9b sind jeweils größer als die Länge L2 und Grundfläche G2 des dritten 9c und vierten stabförmigen Elements 9d.

Neben dieser gezeigten Ausgestaltung einer erfindungsgemäßen Vorrichtung 1 sind noch zahlreiche weitere Varianten denkbar, welche ebenfalls unter die vorliegende Erfindung fallen.

In Fig. 3 ist schließlich die Bestimmung der Reynoldszahl RE illustriert. Gezeigt ist eine Ansicht der Sensoreinheit 2 aus Fig. 2 von oben. Das erste 9a und zweite stabförmige Element 9b bilden die schwingfähige Einheit 4. Das dritte 9c und vierte stabförmige Element 9d bilden eine Strömungseinheit 12 zu Erzeugung von Wirbelströmungen W, welche durch die schwingfähige Einheit 4 detektiert werden. Das dritte stabförmige Element 12c dient dabei als Staukörper.

**Bezugszeichenliste**

| | |
|---|---|
| 1 | Vibronischer Sensor |
| 2 | Medium |
| 3 | Behältnis |
| 4 | Schwingfähige Einheit |
| 5 | Antriebs-/Empfangseinheit |
| 6 | Elektronikeinheit |
| 8 | Membran |
| 9, 9a-9d | stabförmige Elemente |
| 10, 10a,10b | Paddel |
| 11a-11d | piezoelektrische Elemente |
| 12 | Einheit zur Ultraschall-Messung und zur Erzeugung von Wirbelströmungen |
| | |
| A | Anregesignal |
| S | Sendesignal |
| $E_A$ | erstes Empfangssignal |
| Es | zweites Empfangssignal |
| L1, L2 | Länge der stabförmigen Elemente |
| G1, G2 | Grundflächen der stabförmigen Elemente |
| b, $b_1$-$b_4$ | Grundseiten der Schwingelemente |
| d1,d2 | Abstand zum Mittelpunkt der Membran |
| M | Medium |
| W | Wirbelströmung |
| P | Mittelpunkt der Membran |
| O | dem Medium zugewandte Oberfläche der Membran |
| f | Wirbelalösefrequenz |
| SR | Strouhal-Zahl |
| RE | Reynoldszahl |

**Patentansprüche**

1. Verfahren zur Bestimmung und/oder Überwachung zumindest einer Prozessgröße eines Mediums in einem Behältnis,

wobei eine mechanisch schwingfähige Einheit (4) mittels eines Anregesignals (A) zu mechanischen Schwingungen angeregt, und die mechanischen Schwingungen der schwingfähigen Einheit (4) empfangen und in ein erstes Empfangssignal ($E_A$) umgewandelt werden, ein Sendesignal (S) ausgesendet und ein zweites Empfangssignal (Es) empfangen wird, wobei anhand des ersten ($E_A$) und/oder zweiten Empfangssignals (Es) die zumindest eine Prozessgröße bestimmt wird, wobei eine Strömungseigenschaft des Mediums (M) ermittelt wird, wobei ein drittes (9c) und/oder viertes stabförmiges Element (9d) als Staukörper dient/dienen, welche/r im Falle eines strömenden Mediums (M) Wirbel in dem Medium (M) erzeugt/erzeugen, wobei die Wirbel eine geschwindigkeitsabhängige Wirbelablösefrequenz (f) von dem Staukörper aufweisen, wobei eine Wirbelablösefrequenz (f) anhand von durch die Wirbel verursachten Druckschwankungen mittels der schwingfähigen Einheit (4) bestimmt werden, und wobei anhand der Wirbelablösefrequenz (f) die Strouhal-Zahl (SR), die Reynoldszahl (RE) und/oder eine aus der Strouhal-Zahl (SR) und/oder der Reynoldszahl (RE) abgeleitete Größe ermittelt wird.

2. Verfahren nach Anspruch 1, wobei anhand des ersten Empfangssignals ($E_A$) die Viskosität und/oder Dichte bestimmt wird, und wobei zur Bestimmung der Viskosität und/oder Dichte die Reynoldszahl (RE) berücksichtigt wird.

3. Verfahren nach zumindest einem der Ansprüche 1 oder 2, wobei die Strömungseigenschaft anhand der Strouhal-Zahl (SR) und/oder der Reynoldszahl (RE) bestimmt wird

4. Verfahren nach zumindest einem der Ansprüche 1 bis 3,

wobei das Anregesignal (A) und das Sendesignal (S) in einem ersten Betriebsmodus erzeugt werden, wobei im ersten Betriebsmodus anhand des ersten ($E_A$) und/oder zweiten Empfangssignals (Es) die zumindest eine Prozessgröße bestimmt wird, und wobei in einem zweiten Betriebsmodus die Strömungseigenschaft des Mediums (M) ermittelt wird.

5. Vorrichtung (1) zur Bestimmung und/oder Überwachung zumindest einer Prozessgröße eines Mediums (M) in einem Behältnis (3),

    umfassend vier an einer Membran (8) angeordnete stabförmige Elemente (9a-9d), drei piezoelektrische Elemente (11a-11c) und eine Elektronik (6),
    wobei ein erstes (9a) und ein zweites stabförmiges Element (9b) derart angeordnet und ausgestaltet sind, dass sie eine mechanisch schwingfähige Einheit (4) bilden,
    wobei die Vorrichtung (1) dazu ausgestaltet ist, die schwingfähige Einheit (4) mittels eines Anregesignals (A) zu mechanischen Schwingungen anzuregen, und die mechanischen Schwingungen der schwingfähigen Einheit (4) zu empfangen und in ein erstes Empfangssignal ($E_A$) umzuwandeln,
    ein Sendesignal (S) auszusenden und ein zweites Empfangssignal (Es) zu empfangen, und wobei die Elektronik (6) dazu ausgestaltet ist, anhand des ersten ($E_A$) und/oder zweiten Empfangssignals (Es) die zumindest eine Prozessgröße mittels des Verfahrens nach einem der vorhergehenden Ansprüche zu bestimmen.

6. Vorrichtung (1) nach Anspruch 5,
    umfassend vier piezoelektrische Elemente (11a-11d).

7. Vorrichtung (1) nach Anspruch 5 oder 6,
    wobei zumindest ein piezoelektrisches Element (11a-11d) zumindest teilweise innerhalb eines stabförmigen Elements (9a-9d) angeordnet ist.

8. Vorrichtung (1) nach zumindest einem der Ansprüche 5 bis 7,
    wobei es sich bei der Prozessgröße um einen, insbesondere vorgebaren, Füllstand, die Dichte, die Viskosität, die Schallgeschwindigkeit, die Reynoldszahl, oder eine aus zumindest einer dieser Größen abgeleitete Größe handelt.

9. Vorrichtung (1) nach zumindest einem der Ansprüche 5 bis 8,
    wobei die Elektronik (6) dazu ausgestaltet ist, anhand des ersten ($E_A$) und/oder zweiten Empfangssignals (Es) zumindest zwei unterschiedliche Prozessgrößen zu bestimmen.

10. Vorrichtung (1) nach zumindest einem der Ansprüche 5 -9,
    wobei jeweils das erste (9a) und das zweite stabförmige Element (9b) sowie das dritte (9c) und das vierte stabförmige Element (9d) gleichartig ausgestaltet und einander bezogen auf einen Mittelpunkt (P) einer Oberfläche (O) der Membran, an welche die stabförmigen Elemente (9a-9d) angeformt sind, einander gegenüber liegend angeordnet sind.

11. Vorrichtung (1) nach Anspruch 10,
    wobei ein Winkel zwischen einer ersten Verbindungslinie zwischen dem ersten (9a) und zweiten stabförmigen Element (9b) und eine zweite Verbindungslinie zwischen dem dritten (9c) und vierten stabförmigen Element (9d) im Wesentlichen senkrecht zueinander sind.

12. Vorrichtung (1) nach zumindest einem der Ansprüche 5 bis 11,
    wobei jeweils das erste (9a) und das zweite (9b) sowie das dritte (9c) und vierte stabförmige Element (9d) gleich lang sind, und wobei eine Länge (L1) des ersten (9a) und zweiten stabförmigen Elements (9b) größer ist als eine Länge (L2) des dritten (9c) und vierten stabförmigen Elements (9d).

13. Vorrichtung (1) nach zumindest einem der Ansprüche 5 bis 12,
    wobei jeweils d das erste (9a) und das zweite (9b) sowie das dritte (9c) und vierte stabförmige Element (9d) eine identische Grundfläche aufweisen, und wobei eine Grundfläche (G1) ersten (9a) und zweiten stabförmigen Elements (9b) größer ist als eine Grundfläche (G2) des dritten (9c) und vierten stabförmigen Elements (9d).

**Claims**

1. Method to determine and/or monitor at least one process variable of a medium in a container,

    wherein a mechanically resonant unit (4) is caused to vibrate mechanically using a excitation signal (A), and the mechanical vibrations of the resonant unit (4) are received and converted into a first reception signal ($E_A$),
    wherein a transmitter signal (S) is transmitted and a second reception signal (Es) is received,
    wherein the at least one process variable is determined on the basis of the first ($E_A$) and/or the second reception signal (Es),
    wherein a flow characteristic of the medium (M) is determined,
    wherein a third and/or fourth rod-shaped element (9d) serves/serve as a damming body/damming bodies,
    which generate(s) vortices in the medium (M) in the event of a flowing medium (M), wherein the vortices exhibit a speed-dependent vortex shedding frequency (f) based on the damming body,
    wherein a vortex shedding frequency (f) is determined on the basis of pressure fluctuations caused by the vortices using the resonant unit (4),
and wherein the Strouhal number (SR), the Reynolds number (RE), and/or a variable derived from the Strouhal number (SR) and/or the Reynolds number (RE) is determined on the basis of the vortex shedding frequency (f).

2. Method according to claim 1,
wherein the viscosity and/or density is determined on the basis of the first reception signal ($E_A$), and wherein the Reynolds number (RE) is taken into account when determining the viscosity and/or density.

3. Method according to at least one of the claims 1 or 2,
wherein the flow characteristic is determined on the basis of the Strouhal number (SR) and/or the Reynolds number (RE)

4. Method according to at least one of the claims 1 to 3,
wherein the excitation signal (A) and the transmitter signal (S) are generated in a first operating mode, wherein the at least one process variable is determined in the first operating mode on the basis of the first ($E_A$) and/or second reception signal (Es), and wherein the flow characteristic of the medium (M) is determined in a second operating mode

5. Device (1) for determining and/or monitoring at least one process variable of a medium (M) in a container (3),

comprising four rod-shaped elements (9a-9d) that are arranged on a diaphragm (8), three piezoelectric elements (11a-11c), and one electronic system (6),
wherein a first (9a) and a second rod-shaped element (9b) are arranged and configured in such a way that they form a mechanically resonant unit (4),
wherein the device (1) is configured to cause the mechanically resonant unit (4) to vibrate mechanically using a excitation signal (A), as well as to receive the mechanical vibrations of the resonant unit (4) and convert these into a first reception signal ($E_A$),
transmit a transmitter signal (S) and receive a second reception signal (Es), wherein the electronics (6) are configured to determine the at least one process variable using the method according to one of the preceding claims on the basis of the first ($E_A$) and/or second reception signal (Es).

6. Device (1) according to claim 5,
comprising four piezoelectric elements (11a-11d).

7. Device (1) according to claim 5 or 6,
wherein at least one piezoelectric element (11a-11d) is arranged at least in part inside a rod-shaped element (9a-9d).

8. Device (1) according to at least one of the claims 5 to 7,
wherein the process variable is an, in particular definable, fill level, the density, the viscosity, the speed of sound, the Reynolds number, or a variable derived from at least one of these variables.

9. Device (1) according to at least one of the claims 5 to 8,
wherein the electronics (6) are configured to determine at least two different process variables on the basis of the first ($E_A$) and/or second reception signal (Es).

10. Device (1) according to at least one of the claims 5 to 9,
wherein the first (9a) and the second rod-shaped element (9b), as well as the third (9c) and the fourth rod-shaped element (9d) are each configured in the same way and are arranged opposite one another relative to a center point (P) of a surface (0) of the diaphragm, on which the rod-shaped elements (9a-9d) are formed.

11. Device (1) according to claim 10,
wherein an angle between a first connecting line between the first (9a) and second rod-shaped element (9b), and a second connecting line between the third (9c) and fourth rod-shaped element (9d) are essentially aligned vertically to one another.

12. Device (1) according to at least one of the claims 5 to 11,
wherein the first (9a) and the second (9b), as well as the third (9c) and fourth rod-shaped element (9d) are each of equal length, and wherein a length (L1) of the first (9a) and second rod-shaped element (9b) is greater than a length (L2) of the third (9c) and fourth rod-shaped element (9d).

13. Device (1) according to at least one of the claims 5 to 12,
wherein the first (9a) and the second (9b), as well as the third (9c) and fourth rod-shaped element (9d) each exhibit an identical base area, and wherein a base area (G1) of the first (9a) and second rod-shaped element (9b) is larger than a base area (G2) of the third (9c) and fourth rod-shaped element (9d).

**Revendications**

1. Procédé destiné à la détermination et/ou à la surveillance d'au moins une grandeur de process d'un produit dans un réservoir,

une unité apte à vibrer mécaniquement (4) étant excitée en vibrations mécaniques au moyen d'un signal d'excitation (A), et les vibrations mécaniques de l'unité apte à vibrer (4) étant reçues et converties en un premier signal de réception ($E_A$),

un signal d'émission (S) étant émis et un deuxième signal de réception (Es) étant reçu,

l'au moins une grandeur de process étant déterminée à l'aide du premier ($E_A$) et/ou du deuxième signal de réception (Es),

une caractéristique d'écoulement du produit (M) étant déterminée,

un troisième (9c) et/ou un quatrième élément en forme de tige (9d) servant de corps de retenue, lequel élément, dans le cas d'un produit (M) en écoulement, génère des tourbillons dans le produit (M), les tourbillons présentant une fréquence de détachement des tourbillons (f) du corps de retenue, laquelle fréquence dépend de la vitesse,

une fréquence de détachement des tourbillons (f) étant déterminée à l'aide de variations de pression provoquées par les tourbillons au moyen de l'unité apte à vibrer (4),

et le nombre de Strouhal (SR), le nombre de Reynolds (RE) et/ou une grandeur dérivée du nombre de Strouhal (SR) et/ou du nombre de Reynolds (RE) étant déterminés à l'aide de la fréquence de détachement des tourbillons (f).

2. Procédé selon la revendication 1,

pour lequel on détermine la viscosité et/ou la densité à l'aide du premier signal de réception ($E_A$), et

pour lequel on tient compte du nombre de Reynolds (RE) pour déterminer la viscosité et/ou la densité.

3. Procédé selon au moins l'une des revendications 1 ou 2,

pour lequel la caractéristique d'écoulement est déterminée à l'aide du nombre de Strouhal (SR) et/ou du nombre de Reynolds (RE)

4. Procédé selon au moins l'une des revendications 1 à 3,

pour lequel le signal d'excitation (A) et le signal d'émission (S) sont générés dans un premier mode de fonctionnement, l'au moins une grandeur de process étant déterminée, dans le premier mode de fonctionnement, à l'aide du premier ($E_A$) et/ou du deuxième signal de réception (Es), et

la caractéristique d'écoulement du produit (M) étant déterminée dans un deuxième mode de fonctionnement.

5. Dispositif (1) destiné à la détermination et/ou à la surveillance d'au moins une grandeur de process d'un produit (M) dans un réservoir (3),

lequel dispositif comprend quatre éléments en forme de tige (9a-9d) disposés sur une membrane (8), trois éléments piézoélectriques (11a-11c) et une électronique (6),

un premier (9a) et un deuxième élément en forme de tige (9b) étant disposés et conçus de telle sorte qu'ils forment une unité apte à vibrer mécaniquement (4),

le dispositif (1) étant conçu pour

exciter l'unité apte à vibrer (4) en vibrations mécaniques au moyen d'un signal d'excitation (A), et recevoir les vibrations mécaniques de l'unité apte à vibrer (4) et les convertir en un premier signal de réception ($E_A$),

émettre un signal d'émission (S) et recevoir un deuxième signal de réception ($E_S$), et

l'électronique (6) étant conçue pour déterminer, à l'aide du premier ($E_A$) et/ou du deuxième signal de réception (Es), l'au moins une grandeur de process au moyen du procédé selon l'une des revendications précédentes.

6. Dispositif (1) selon la revendication 5,

lequel dispositif comprend quatre éléments piézoélectriques (11a-11d).

7. Dispositif (1) selon la revendication 5 ou 6,

pour lequel au moins un élément piézoélectrique (11a-11d) est disposé au moins partiellement à l'intérieur d'un élément en forme de tige (9a-9d).

8. Dispositif (1) selon au moins l'une des revendications 5 à 7,

pour lequel la grandeur de process est un niveau, notamment prédéfinissable, la densité, la viscosité, la vitesse du son, le nombre de Reynolds, ou une grandeur dérivée d'au moins l'une de ces grandeurs.

9. Dispositif (1) selon au moins l'une des revendications 5 à 8,

pour lequel l'électronique (6) est conçue pour déterminer au moins deux grandeurs de process différentes à l'aide du premier ($E_A$) et/ou du deuxième signal de réception (Es).

10. Dispositif (1) selon au moins l'une des revendications 5 à 9,

pour lequel le premier (9a) et le deuxième (9b) élément en forme de tige ainsi que le troisième (9c) et le quatrième (9d) élément en forme de tige sont conçus de manière identique et sont disposés en vis-à-vis l'un de l'autre par rapport à un centre (P) d'une surface (O) de la membrane, sur laquelle les éléments en forme de tige (9a-9d) sont formés.

11. Dispositif (1) selon la revendication 10,
pour lequel un angle entre une première ligne de connexion entre le premier (9a) et le deuxième (9b) élément en forme de tige et une deuxième ligne de connexion entre le troisième (9c) et le quatrième (9d) élément en forme de tige sont pour l'essentiel perpendiculaires l'un à l'autre.

12. Dispositif (1) selon au moins l'une des revendications 5 à 11,

   pour lequel respectivement le premier (9a) et le deuxième (9b) élément en forme de tige, ainsi que le troisième (9c) et le quatrième (9d) élément en forme de tige, sont de même longueur, et
   pour lequel une longueur (L1) du premier (9a) et du deuxième élément en forme de tige (9b) est supérieure à une longueur (L2) du troisième (9c) et du quatrième élément en forme de tige (9d).

13. Dispositif (1) selon au moins l'une des revendications 5 à 12,

   pour lequel respectivement le premier (9a) et le deuxième (9b) ainsi que le troisième (9c) et le quatrième élément (9d) en forme de tige présentent une surface de base identique, et
   pour lequel une surface de base (G1) du premier (9a) et du deuxième élément en forme de tige (9b) est supérieure à une surface de base (G2) du troisième (9c) et du quatrième élément (9d) en forme de tige.

Fig. 1a

Fig. 1b

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1
- DE 102007043811 A1

- DE 10057974 A1
- DE 102006033819 A1
- DE 102015102834 A1
- DE 102016112743 A1
- EP 2019064724 W
- DE 102017130527 A1
- DE 102015122124 A1
- DE 102012100728 A1
- WO 0009973 A1